# EUROPÄISCHE PATENTANMELDUNG

(11) **EP 2 218 533 A1**
(43) Veröffentlichungstag der Anmeldung: **18.08.2010**
(21) Anmeldenummer: 10000786.3
(22) Anmeldetag: 27.01.2010
(51) Int. Cl.: B23D 59/00, B27B 17/00

(54) **Bauteil zur lösbaren Befestigung an einer Handschneidevorrichtung**

(30) Priorität: 14.02.2009 DE 102009008983
(71) Anmelder: Niedersächsische Landesforsten Anstalt öffentlichen Rechts, 38102 Braunschweig (DE)
(72) Erfinder: Kapell, Holger, 21394 Südergellersen (DE)
(74) Vertreter: Knoop, Philipp

(57) **Zusammenfassung**

Um Mittel anzugeben, die beliebige im Markt befindliche Handschneidevorrichtungen, insbesondere Motorsägen, ohne Anpassungen der Handschneidevorrichtung mit einer Möglichkeit versehen, zusätzliche Parameter zu bestimmen, die es insbesondere ermöglichen, eine exakte Schnitttechnik einzuhalten, wird ein Bauteil (4) zur lösbaren Befestigung an einer, vorzugsweise motorisierten, Handschneidevorrichtung, insbesondere Motorsäge (1), vorgeschlagen, welches mit einer Meßvorrichtung (5) versehen ist.

Ebenfalls wird eine Handschneidevorrichtung (1), insbesondere motorisierte, vorgeschlagen, welche ein Bauteil (4) der genannten Art aufweist.

## Beschreibung

Die vorliegende Erfindung betrifft ein Bauteil zur lösbaren Befestigung an einer, vorzugsweise motorisierten, Handschneidevorrichtung, insbesondere Motorsäge.

Außerdem betrifft die vorliegende Erfindung eine Handschneidevorrichtung, insbesondere motorisierte.

Handschneidevorrichtungen sind beispielsweise als Motorsägen oder Heckenscheren bekannt und gebräuchlich. Meist sind sie mit einem Benzin- oder Elektromotor versehen. Bei der Benutzung von gattungsgemäßen Handschneidevorrichtungen ist charakteristisch, dass diese vom Benutzer frei in der Hand, also ohne Auflage oder Führungsvorrichtung geführt und gehalten werden. Beim Fällen von Bäumen gleichermaßen wie beispielsweise beim Schneiden einer Hecke besteht jedoch häufig das Erfordernis, eine bestimmte, vorgegebene Schnitttechnik möglichst fehlerfrei einhalten zu können. So ist beim Fällen von starkem Baumholz ein bestimmtes Schnittmuster einzuhalten, um sicher zu stellen, dass der zu fällende Baum in einer gewünschten Richtung fällt, ohne dass der Benutzer der Motorsäge oder andere Personen oder Gegenstände gefährdet werden.

Beim Schneiden mit einer Heckenschere ist es auf der anderen Seite häufig gewünscht, aus ästhetischen Gründen ein bestimmtes Schnittmuster einhalten zu können.

Aus diesen Gründen wurden bereits Handschneidevorrichtungen vorgeschlagen, welche eine Orientierungsanzeige umfassen. So ist aus der US 4,794,701 eine Orientierungsanzeige für eine Motorsäge bekannt, welche sich zum Anbringen an eine Kettensäge eignet. Die Befestigung der bekannten Anzeigevorrichtung an der Kettensäge ist mittels eines Ringblechs und einer Schraube am Rahmen der Motorsäge vorgesehen. Die bekannte Orientierungsanzeige ist jedoch mit Nachteil für die rauhen Verhältnisse, wie sie in der Regel bei der Waldarbeit vorherrschen, nur bedingt geeignet. Denn das für die Befestigung vorgesehene Halteblech ist leicht verbiegbar, wenn etwa Äste darauf fallen oder dahinter haken. Zudem ist eine Nachrüstung von Motorsägen mit der bekannten Orientierungsanzeige nur durch zusätzliche Anpassungen an der Motorsäge möglich.

Aus der US 5,467,532 ist eine Heckenschere bekannt, auf die eine halbkugelförmige Libelle auf die Oberseite aufgesetzt ist. Ein nachträgliches Anbringen der Libelle auf einer Heckenschere entsprechend der Offenbarung der US 5,467,532 ist hingegen mit Nachteil nur möglich, wenn zusätzliche Bohrungen im Gehäuse der Heckenschere vorgesehen werden. Dadurch ist ein Nachrüsten umständlich bzw. sogar unmöglich, sofern ein Anbohren des Gehäuses nicht in Betracht kommt.

Die US 3,540,122 macht eine Heckenschere und ein Nivellierungssystem dafür bekannt. Das Nivellierungssystem ist in Form zweier Libellen in eigens dafür vorgesehenen Aushöhlungen im Rahmen der Heckenschere befestigt. Ein Nachrüsten vorhandener Heckenscheren mit der Libelle ist somit mit Nachteil nicht möglich. Ferner ist das Ablesen zweier an unterschiedlichen Positionen angebrachten Libellen für den Benutzer schwierig.

Die der vorliegenden Erfindung zugrunde liegende Aufgabe ist es daher, Mittel anzugeben, die im Markt befindliche Handschneidevorrichtungen, insbesondere Motorsägen, ohne Anpassungen der Handschneidevorrichtung mit einer Möglichkeit versehen, zusätzliche Parameter zu bestimmen, die es insbesondere ermöglichen, eine exakte Schnitttechnik einzuhalten.

Diese Aufgabe wird gelöst mit einem Bauteil zur lösbaren Befestigung an einer, vorzugsweise motorisierten, Handschneidevorrichtung, insbesondere Motorsäge, welches mit einer Messvorrichtung versehen ist. Die Messvorrichtung wird somit mit Vorteil an einem Bauteil der Handschneidevorrichtung befestigt. Da das lösbare Bauteil ohnehin fester Bestandteil der Motorsäge oder Heckenschere oder ähnlichen Handschneidevorrichtung ist, ist gewährleistet, dass das mit der Messvorrichtung versehene Bauteil ohne jegliche Anpassung der beispielsweise Motorsäge an dieser anbringbar ist. Es ergibt sich mit Vorteil auf überraschend einfache Weise die Möglichkeit, vorhandene Handschneidevorrichtungen durch Austauschen des lösbaren Bauteils mit einem erfindungsgemäßen, mit einer Messvorrichtung versehenen Bauteil umzurüsten.

In bevorzugter Ausgestaltung der Erfindung ist vorgesehen, dass das erfindungsgemäße Bauteil als für den bestimmungsgemäßen Betrieb der Handschneidevorrichtung erforderliches Bauteil ausgestaltet ist. Durch diese Maßnahme ergibt sich im Besonderen der Vorteil, dass alle im Markt bereits vorhandenen Handschneidevorrichtungen mit einem jeweils angepaßten erfindungsgemäßen Bauteil nachrüstbar sind.

Erfindungsgemäß kann das Bauteil in besonders günstiger Ausgestaltung als Deckel, insbesondere Lüfterdeckel oder Tankdeckel und/oder Öltankdeckel, ausgestaltet sein. In vielen Fällen ist beispielsweise bei einer Motorsäge der Lüfterdeckel beim bestimmungsgemäßen Gebrauch der Motorsäge seitlich angeordnet und eignet sich daher mit Vorteil zum Anbringen einer Messvorrichtung. Eine mit einer Anzeige versehene Messvorrichtung lässt sich dann bequem bei der Benutzung der Handschneidevorrichtung mit dem erfindungsgemäßen Bauteil ablesen. Gleiches trifft auch auf den Tankdeckel zu, welcher ein für den bestimmungsgemäßen Betrieb einer Motorsäge oder Heckenschere erforderliches Bauteil ist und insofern bei jedem Gerät vorhanden ist. Zudem ist die Anordnung des Tankdeckels an der Handschneidevorrichtung in der Regel derart, dass ein Ablesen der Anzeige einer Messvorrichtung gemäß der Erfindung für den Benutzer bequem möglich ist.

Wenn in bevorzugter Ausgestaltung des erfindungsgemäßen Bauteils die Messvorrichtung zum Anzeigen einer horizontalen und einer vertikalen Ausrichtung der Handschneidevorrichtung ausgebildet ist, lässt sich mit Vorteil eine Ausrichtung einer Motorsäge oder Heckenschere im Betrieb in horizontaler und/oder vertikaler Richtung sicherstellen. Dies ist vorteilhaft, um im Falle einer Motorsäge eine vorgegebene Schnitttechnik einhalten zu können. So ist beim Fällen von starkem Baumholz ein bestimmtes Schnittmuster einzuhalten, um sicher zu stellen, dass der zu fällende Baum in einer gewünschten Richtung fällt, ohne dass der Benutzer der Motorsäge oder andere Personen oder Gegenstände gefährdet werden.

Im Falle einer Heckenschere lassen sich in ästhetischer Hinsicht gewünschte horizontale oder vertikale Trimmungen besonders exakt erzielen. Erfindungsgemäß kann eine beliebige Motorsäge oder Heckenschere oder sonstige Handschneidevorrichtung anhand des erfindungsgemäßen Bauteils mit der Messvorrichtung nachgerüstet werden.

Als Messvorrichtung zum Anzeigen in der horizontalen oder der vertikalen Ausrichtung der Handschneidevorrichtung können im Rahmen der Erfindung alle üblichen Geräte verwendet werden. Beispielsweise können sogenannte Klinometer verwendet werden, welche die Horizontale einspielen. Alternativ ist die Verwendung eines Gravimeters zur Bestimmung der Schwerebeschleunigung zwecks horizontalen Ausrichtens möglich. Denkbar ist im Rahmen der Erfindung auch die Ausgestaltung der Messvorrichtung als Schwerkraft- oder Neigungssensor mit elektrischem oder elektrooptischem Abgriff der Messwerte.

In bevorzugter Ausgestaltung des erfindungsgemäßen Bauteils weist die Messvorrichtung eine Libelle, insbesondere Dosenlibelle auf. Mit einer Libelle lässt sich in bewährter und robuster Weise ohne Einsatz von Elektronik eine Ausrichtung der Handschneidevorrichtung visualisieren. Die Verwendung einer Dosenlibelle ermöglicht die Ausrichtung in zwei Raumrichtungen. Gleichermaßen kann die Messvorrichtung im Rahmen der Erfindung ein oder mehrere Röhrenlibellen aufweisen, um in einer oder mehrerer Dimensionen die Handschneidevorrichtung ausrichten zu können. Die Libelle kann als herkömmliche Libelle oder als Elektrolyt-Libelle oder in jeder anderen üblichen Weise ausgestaltet sein. Vorteilhaft ist die Flüssigkeit frostsicher. Außerdem sollte die Flüssigkeit so gewählt sein, daß die Blase vibrationsstabil ist, um beim vibrationsstarken Einsatz der Motorsäge ein Ablesen der Libelle zu ermöglichen. Ferner sollte die Oberfläche der Libelle stoß- und/oder kratzfest ausgestaltet sein.

Das erfindungsgemäße Bauteil wird noch verbessert, wenn es Befestigungsmittel zur lösbaren Befestigung an der Handschneidevorrichtung aufweist, wobei die Befestigungsmittel zum Zusammenwirken mit Komplementärbefestigungsmitteln der Handschneidevorrichtung ausgebildet sind. Beispielsweise kann das Bauteil mit Vorteil ein Außengewinde zum Eingreifen in ein entsprechendes Innengewinde auf Seiten der Handschneidevorrichtung aufweisen. Dies ist beispielsweise im Falle von Lüfterdeckeln oder Tankdeckeln von Motorsägen oder der Heckenscheren denkbar. Die Befestigung kann auch als Formschlussverbindung oder elastische Verbindung ausgestaltet sein. Beispielsweise kann das erfindungsgemäße Bauteil als gummielastischer Tankdeckel ausgestaltet sein, welcher über einen entsprechenden zylindrischen Stutzen auf Seiten der Handschneidevorrichtung aufgesteckt wird. Auch diese Maßnahmen stellen eine sofortige Umrüstbarkeit einer existierenden Handschneidevorrichtung sicher.

Eine Variante des erfindungsgemäßen Bauteils sieht vor, dass die Messvorrichtung zum Messen und/oder Anzeigen eines meteorologischen Parameters, insbesondere einer Umgebungstemperatur und/oder einer Umgebungsluftfeuchte, und/oder einer Uhrzeit und/oder eines GPS-Signals ausgebildet ist. Diese Parameter sind mit Vorteil für den Benutzer der Handschneidevorrichtung von Bedeutung. Mit Vorteil ist die Nachrüstbarkeit vorhandener Handschneidevorrichtungen mit den genannten Messvorrichtungen gewährleistet, da erfindungsgemäß das Bauteil ein lösbares Bauteil dieser Handschneidevorrichtungen ist.

Insbesondere können im Rahmen der Erfindung die Befestigungsmittel ein Gewinde und/oder eine Klemmvorrichtung umfassen.

Die der Erfindung zugrunde gelegte Aufgabe wird gleichermaßen gelöst durch eine Handschneidevorrichtung, insbesondere motorisierte, welche ein Bauteil der oben beschriebenen Art aufweist. Mit Vorteil ist die erfindungsgemäße Handschneidevorrichtung, beispielsweise eine Motorsäge oder Heckenschere, erfindungsgemäß um eine Messvorrichtung ergänzt, ohne dass die Handschneidevorrichtung an sich verändert werden muss. Lediglich ein lösbares Bauteil der Handschneidevorrichtung, beispielsweise ein Tank- oder Lüfterdeckel, muss ersetzt werden durch das erfindungsgemäße Bauteil.

In bevorzugter Ausgestaltung der Erfindung ist die Handschneidevorrichtung als Motorsäge ausgestaltet.

Im Rahmen der Erfindung kann die Handschneidevorrichtung mit Vorteil Komplementärbefestigungsmittel zum Zusammenwirken mit Befestigungsmitteln des Bauteils aufweisen. Beispielsweise kann die Handschneidevorrichtung einen zylindrischen Aufnahmestutzen für einen erfindungsgemäß mit einer Messvorrichtung versehenen Tankdeckel oder Lüfterdeckel aufweisen. Ebenso ist eine Schraubverbindung zwischen dem lösbaren, erfindungsgemäß mit einer Messvorrichtung versehenen Bauteil und der Handschneidevorrichtung denkbar.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind mit denselben Bezugszeichen versehen.

### Die einzige Figur der Zeichnung zeigt im Einzenen:

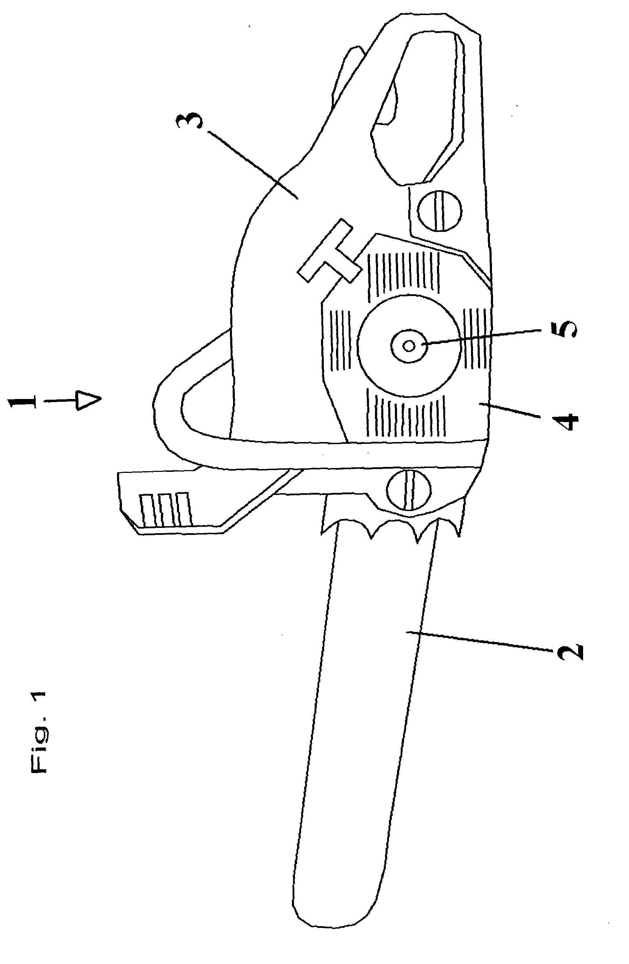

- Figur 1: Eine Motorsäge mit einem erfindungsgemäßen Lüfterdeckel.

Die Figur 1 zeigt eine Motorsäge 1 in schematischer, perspektivischer Ansicht. Die Motorsäge 1 ist herkömmlich aufgebaut mit einem Kettensägenabschnitt 2 und einem Motorgehäuseteil 3. Seitlich an dem Motorgehäuseteil 3 befindet sich ein Lüfterdeckel 4. Der Lüfterdeckei 4 ist in üblicher Weise lösbar an dem Motorgehäuseteil 3 befestigt. Der Lüfterdeckel 4 deckt einen im Motorgehäuseteil 3 integrierten Lüfter (nicht näher dargestellt) der Motorsäge 1 ab. Der Lüfterdeckel 4 ist als solcher ein fester Bestandteil der Motorsäge 1, welcher im bestimmungsgemäßen Gebrauch der Motorsäge 1 erforderlich ist, um den darunter befindlichen Lüfter (nicht dargestellt) von Außen zu schützen.

In den Lüfterdeckel 4 ist eine Dosenlibelle 5 integriert. Dazu weist der Lüfterdeckel eine Bohrung auf, die mit einem Innengewinde versehen ist. Die Dosenlibelle ist an ihrer Außenmantelfläche mit einem entsprechenden Außengewinde versehen und die Bohrung im Lüfterdeckel eingeschraubt. Vorteilhaft ist ein Anschlag vorgesehen, der ein Einschrauben bis zu einer definierten Stellung sicherstellt. Die Bohrung im Lüfterdeckei 4 ist derart ausgerichtet, daß deren Achse im eingebauten Zustand des Lüfterdeckels 4 in der Motorsäge 1 dann horizontal ausgerichtet ist, wenn die Motorsäge 1 horizontal ausgerichtet ist.

Die Dosenlibelle 5 ist in der Figur nur schematisch angedeutet und entspricht in der Ausführung einer handelsüblichen Dosenlibelle. Sie besteht, wie üblich, aus einem Kunststoffgefäß, das im Innern nach oben kugelförmig rund ausgeschliffen ist und an der Außenfläche oben mittig darüber ein oder zwei Markierungskreise aufweist. Die Außenfläche ist flach. Die Dosenlibelle 5 kann mit Justierschrauben versehen sein, um eine Ausrichtung der Dosenlibelle relativ zum Motorgehäuseteil 3 bzw. relativ zum Lüfterdeckel 4 nach dem Einschrauben zu ermöglichen. Bevorzugt ist die Bohrung im Lüfterdeckel 4 jedoch so orientiert, daß ein manuelles Justieren relativ zur Motorsäge 1 nicht erforderlich ist.

Der Lüfterdeckel 4 mit der darin integrierten Dosenlibelle 5 ist mit dem Motorgehäuseteil 3 der Motorsäge 1 in derselben Weise befestigt, wie ein herkömmlicher Lüfterdeckel 4. In dem hier beschriebenen Ausführungsbeispiel ist der Lüfterdeckel 4 in nicht näher dargestellter Weise mittels Gewindeschrauben in im Motorgehäuseteil 3 vorgesehenen Gewindebohrungen verschraubt.

Der erfindungsgemäße Lüfterdeckel 4 mit der darin integrierten Dosenlibelle 5 kann durch Austausch eines herkömmlichen Lüfterdeckels 4 ohne jegliche Veränderungen des Motorgehäuseteils 3 der Motorsäge 1 bei der Motorsäge 1 nachgerüstet werden.

Zum Gebrauch der erfindungsgemäßen Motorsäge 1 mit dem erfindungsgemäßen Lüfterdeckel 4, enthaltend die Dosenlibelle 5, wird die Motorsäge 1 in üblicher Weise zum Sägen benutzt. Dabei kann der Bediener an der Dosenlibelle 5 die Ausrichtung der Motorsäge 1 ablesen. Hierdurch wird es dem Benutzer mit Vorteil erleichtert, eine vorgegebene Schnitttechnik, beispielsweise beim Fällen von Bäumen, einzuhalten.

### BEZUGSZEICHENLISTE

- 1: Motorsäge
- 2: Kettensägenabschnitt
- 3: Motorgehäuseteil
- 4: Lüfterdeckel
- 5: Dosenlibelle

## Patentansprüche

1. Bauteil (4) zur lösbaren Befestigung an einer, vorzugsweise motorisierten, Handschneidevorrichtung, insbesondere Motorsäge (1), **dadurch gekennzeichnet, dass** es mit einer Meßvorrichtung (5) versehen ist.

2. Bauteil (4) nach Anspruch 1, **dadurch gekennzeichnet, dass** es als für den bestimmungsgemäßen Betrieb einer Handschneidevorrichtung (1) erforderliches Bauteil (4) ausgestaltet ist.

3. Bauteil (4) nach Anspruch 1 oder 2, **dadurch gekennzeichnet, dass** es als Deckel, insbesondere Lüfterdeckel (4) und/oder Tankdeckel und/oder Öltankdeckel, ausgestaltet ist.

4. Bauteil (4) nach einem der Ansprüche 1 bis 3, **dadurch gekennzeichnet, dass** die Meßvorrichtung (5) zum Anzeigen einer horizontalen und/oder vertikalen Ausrichtung einer Handschneidevorrichtung (1) ausgebildet ist.

5. Bauteil (4) nach einem der Ansprüche 1 bis 4, **dadurch gekennzeichnet, dass** die Meßvorrichtung eine Libelle, insbesondere Dosenlibelle (5), aufweist.

6. Bauteil (4) nach einem der Ansprüche 1 bis 5, **dadurch gekennzeichnet, dass** es Befestigungsmittel zur lösbaren Befestigung an einer Handschneidevorrichtung (1) aufweist, wobei die Befestigungsmittel zum Zusammenwirken mit Komplementärbefestigungsmitteln einer Handschneidevorrichtung (1) ausgebildet sind.

7. Bauteil (4) nach einem der vorherigen Ansprüche, **dadurch gekennzeichnet, dass** die Meßvorrichtung (5) zum Messen und/oder Anzeigen eines meteorologischen Parameters, insbesondere einer Umgebungstemperatur und/oder einer Umgebungsluftfeuchte, und/oder einer Uhrzeit und/oder eines GPS-Signals ausgebildet ist.

8. Bauteil (4) nach einem der vorherigen Ansprüche, **dadurch gekennzeichnet, dass** die Befestigungsmittel ein Gewinde und/oder eine Klemmvorrichtung umfassen.

9. Handschneidevorrichtung (1), insbesondere motorisierte,
**dadurch gekennzeichnet, dass** sie ein Bauteil (4) nach einem der vorhergehenden Ansprüche aufweist.

10. Handschneidevorrichtung (1) nach Anspruch 9, **dadurch gekennzeichnet, dass** sie als Motorsäge (1) ausgestaltet ist.

11. Handschneidevorrichtung nach einem der Ansprüche 9 oder 10,
**dadurch gekennzeichnet, dass** sie Komplementärbefestigungsmittel zum Zusammenwirken mit Befestigungsmitteln des Bauteils (4) aufweist.
